# EUROPÄISCHE PATENTSCHRIFT

(11) **EP 1 457 405 B1**
(45) Veröffentlichungstag und Bekanntmachung des Hinweises auf die Patenterteilung: **11.10.2006**
(21) Anmeldenummer: 04003733.5
(22) Anmeldetag: 19.02.2004
(51) Int. Cl.: B62D 5/04, F16H 7/14

(54) **Servolenkung**
Power steering
Direction assistée

(30) Priorität: 11.03.2003 DE 10310492
(43) Veröffentlichungstag der Anmeldung: 15.09.2004
(73) Patentinhaber: ZF Lenksysteme GmbH, 73527 Schwäbisch Gmünd (DE)
(72) Erfinder: Budaker, Martin, 73540 Heubach (DE); Requena, Carlos, 70374 Stuttgart (DE); Knödler, Helmut, 73547 Lorch (DE)

(56) Entgegenhaltungen:
- EP-A- 1 553 006
- WO-A-02/076808
- DE-A- 10 049 570
- DE-A- 10 304 189
- DE-C- 815 874

## Beschreibung

Die Erfindung betrifft eine Servolenkung, insbesondere für Kraftfahrzeuge, mit einem Lenkungsgehäuse, einem Elektromotor und einer Schubstange zum Auslenken von Fahrzeugrädern.

Eine solche Kraftfahrzeugservolenkung ist aus der DE 100 52 275 A1 bekannt.

Die genannte Schrift beschreibt eine Getriebeeinrichtung bestehend aus Riemen und Riemenscheiben. Dabei ist eine Ausgangswelle des Elektromotors sowie die Schubstange jeweils mit einer Riemenscheibe versehen, die mittels dem Riemen miteinander verbunden sind. Daraus ergibt sich eine spielfreie Verbindung zwischen dem Elektromotor und dem Lenkgetriebe.

Sowohl die aus der Praxis bekannten Lenkungsgehäuse als auch das Lenkungsgehäuse gemäß der gattungsgemäßen Schrift weisen koaxial zur Schubstange bzw. Zahnstange eine Öffnung zur Montage der Riemenscheibe auf. Diese Öffnung ist in der Regel kreisrund, um eine einfache und sichere Abdichtung zwischen dem Lenkungsgehäuse und einem Gehäusedeckel zu erhalten. Des weiteren weist das Lenkungsgehäuse eine Öffnung koaxial zum Elektromotor auf.

Von Nachteil bei Getrieben bestehend aus Riemen und Riemenscheibe ist die Montage des Riemens bzw. die Einstellung einer definierten Vorspannung. Zur Montage in eine Servolenkung für ein Kraftfahrzeug muss aufgrund der baulichen Beschränkung der Riemen zuerst in das Lenkungsgehäuse eingelegt werden. Anschließend werden die Riemenscheiben montiert. Die Montage der kleinen Riemenscheibe, d.h. der Riemenscheibe für den Elektromotor, erfolgt dabei weitgehend blind, da der hierfür im Lenkungsgehäuse vorgesehene Bauraum lediglich durch die kleine Öffnung für den Elektromotor zugänglich ist. Erschwerend kommt hinzu, dass der Riemen mit einer radialen Vorspannung montiert werden muss und aufgrund der räumlichen Gegebenheiten keine Montagehilfswerkzeuge eingesetzt werden können. Ein praxistaugliches Verfahren zur Montage einer Getriebeeinheit bestehend aus Riemen und Riemenscheiben für Servolenkungen, das insbesondere auch für eine Serienfertigung geeignet ist, ist nicht bekannt.

Hinsichtlich des allgemeinen Standes der Technik betreffend Servolenkungen für Kraftfahrzeuge wird auf die EP 0 133 003 B1 sowie die EP 0 101 579 B1 verwiesen.

Die EP 0 101 579 B1 zeigt einen elektrischen Servomotor, der über einen Kugelumlauf auf eine Zahnstange wirkt. Der Elektromotor, der Kugelumlauf und die Zahnstange sind dabei koaxial angeordnet. Der Elektromotor umgreift den Kugelumlauf an seiner Außenseite. Bei der Ausführung gemäß der EP 0 101 579 B1 ist die Spurstangenkraft direkt abhängig von der Steigung des Kugelumlaufgewindes. Da aus Festigkeitsgründen der Kugeldurchmesser nicht wesentlich kleiner als 5 mm sein kann, ist die Steigung ebenfalls mit 5 mm festgelegt. Dies bedingt einen großen, langsam laufenden und dadurch teuren Elektromotor.

Die EP 0 133 003 B1 beschreibt eine Servolenkung, bei der ein Elektromotor ebenfalls über einen Kugelumlauf auf eine Zahnstange wirkt. Hierbei ist der erforderliche Bauraum für die Verwendung am Kraftfahrzeug günstiger aufgeteilt, indem der Elektromotor von dem Kugelumlauf in Axialrichtung beabstandet ist. Dabei kämmt das Motorritzel mit einem Stirnrad mit großem Radius, welches koaxial zum Kugelumlauf angeordnet ist. Dieser große Stirnradradius bedingt auch auf der dem Elektromotor abgewandten Seite einen großen Bauraum.

Die WO 02/076808 A1 offenbart eine Antriebseinrichtung eines Kraftfahrzeug-Achslenkmoduls bei der mit einem achsparallel angeordneten Drehantrieb unter Zwischenschaltung einer Übertragungseinrichtung eine Lenkstange verlagerbar ist. Die Übertragungseinrichtung weist dabei eine biegeweiche bzw. verdrehweiche Kupplung oder ein Getriebe mit einer biegeweichen bzw. verdrehweichen Lagerung auf. Durch das besondere Antriebs- bzw. Lagerungskonzept wird der elektromechanische Gesamtwirkungsgrad optimiert, da die entstehenden Biegemomente durch die auf die Zahnstange einwirkenden Radialkräfte besser ausgleichbar sind. Die Übertragung eines Antriebsmoments auf die Kupplung erfolgt dabei mittels eines Riementriebs dessen Riemenscheiben ortsfest in einem Gehäuseteil gelagert sind.

In der DE C 815 874 wird ein Hüllantrieb zu Kupplung zweier benachbarter Wellen beschrieben. Es ist vorgesehen zwei auf einer Welle angeordneten exzentrischen Elemente zu verwenden, dessen exzentrischen Wirkungen sich im Betriebsfall gegenseitig aufheben. Zur Herbeiführung einer exzentrischen Wirkung werden die exzentrischen Elemente relativ zueinander um 180° gedreht.

Die in der nachveröffentlichten Schrift EP 1 553 006 A1 offenbarte Servolenkung zeigt eine Servolenkung mit einem Lenkungsgehäuse, einem Elektromotor und einer Schubstange zum Auslenken von Fahrzeugrädern, wobei eine Ausgangswelle des Elektromotors und die Schubstange jeweils mit einer Riemenscheibe verbunden sind und wobei die Riemenscheibe der Ausgangswelle des Elektromotors mit der Riemenscheibe der Schubstange mittels einem Riemen antriebsmässig verbunden ist, wobei der Elektromotor mittels einem Exzenter derart gelagert ist, dass der Achsabstand zwischen der Ausgangswelle des Elektromotors und der Schubstange variierbar ist.

Der vorliegenden Erfindung liegt die Aufgabe zugrunde, eine Servolenkung, insbesondere für Kraftfahrzeuge, mit einer Getriebeeinrichtung aus Riemen und Riemenscheiben zu schaffen, die eine einfache, kostengünstige und serienmäßige Montage ermöglicht.

Der vorliegenden Erfindung liegt auch die Aufgabe zugrunde, ein Verfahren zu schaffen, wodurch eine einfache, kostengünstige und serienmäßige Montage einer Servolenkung, insbesondere für Kraftfahrzeuge, mit einer Getriebeeinrichtung aus Riemen und Riemenscheiben möglich ist.

Diese Aufgabe wird erfindungsgemäß durch den Anspruch 1 gelöst.

Hinsichtlich einem Verfahren zur Montage und/oder Einstellung einer Riemen und Riemenscheiben aufweisenden Getriebeeinrichtung wird die Aufgabe durch den Anspruch 12 gelöst.

Dadurch, dass die Schubstange mit einem Exzenter derart gelagert ist, dass der Achsabstand zwischen der Ausgangswelle und der Schubstange variierbar ist, lässt sich dieser in einfacher Weise zu Montagezwecken verringern, so dass die Montage des Riemens bzw. der Riemenscheiben vorspannungsfrei erfolgen kann. Der Erfinder hat dabei erkannt, dass das Hauptproblem bei der Montage der aus Riemen und Riemenscheiben bestehenden Getriebeeinheit darin besteht, dass lediglich die als erstes zu montierende Riemenscheibe einfach eingebracht werden kann, wobei die nachfolgend zu montierende Riemenscheibe aufgrund der radialen Vorspannung des Riemens praktisch nicht serienmäßig montierbar ist. Durch die Möglichkeit, den Achsabstand zwischen der Ausgangswelle und der Schubstange zu variieren, kann der Riemen derart in dem Lenkungsgehäuse verschoben werden, dass auch die an zweiter Stelle zu montierende Riemenscheibe einfach eingeschoben werden kann. Nach dem Einschieben der zweiten Riemenscheibe kann der Achsabstand mittels dem Exzenter wieder auf die spätere Betriebsstellung gebracht werden, wodurch der Riemen eine entsprechende Vorspannung erhält.

Erfindungsgemäß ist die Schubstange mittels einem als Exzenterring ausgebildeten Exzenter in dem Lenkungsgehäuse gelagert.

Eine Ausbildung des Exzenters als Exzenterring, der gleichzeitig zur Lagerung der Schubstange in dem Lenkungsgehäuse verwendet wird, lässt sich in einfacher und vorteilhafter Weise realisieren. Der bisher notwendige Lagerring kann dabei entfallen bzw. wird durch den Exzenterring ersetzt. Somit ist es in einfacher Weise möglich, in einem ersten Arbeitsgang den Riemen in das Lenkungsgehäuse einzulegen und die Schubstange mit der zugeordneten Riemenscheibe zu montieren. Die Schubstange kann dabei als Teil einer Kugelspindel ausgebildet sein und somit zusätzlich zu dem Exzenterring über ein Lager sowie eine Lenkmutter verfügen.

Die vormontierte Kugelspindel kann derart in dem Lenkungsgehäuse montiert werden, dass sich der Exzenterring in Betriebsstellung befindet. In einem nächsten Arbeitsschritt kann in einfacher Weise der Riemen von der Elektromotorseite her in die Riemenscheibe der Schubstange hineingezogen werden. Danach wird der Achsabstand zwischen der Ausgangswelle des Elektromotors und der Schubstange durch die Drehung des Exzenterringes in die Montagestellung verringert. Dadurch legt sich der Riemen an die Kontur des Lenkungsgehäuses im Bereich der Riemenscheibe des Elektromotors an, so dass in diesem Bereich ein maximal großer Freiraum zur Aufnahme der einzubringenden Riemenscheibe des Elektromotors gebildet wird. Der Elektromotor mit der Ausgangswelle und der Riemenscheibe kann in einfacher Weise durch die entsprechende Öffnung des Gehäuses eingeführt werden. Nachdem der Elektromotor mit der Riemenscheibe eingeführt ist, wird der Achsabstand zwischen der Ausgangswelle und der Schubstange wieder auf die vorgesehene Betriebsstellung vergrößert, so dass der Riemen in die Riemenscheibe des Elektromotors hineingezogen wird und gegebenenfalls eine gewünschte Vorspannung eingestellt werden kann.

Vorteilhafte Ausgestaltungen und Weiterbildungen der Erfindung ergeben sich aus den weiteren Unteransprüchen und aus dem nachfolgend anhand der Zeichnung prinzipmäßig dargestellten Ausführungsbeispiel.

Hinsichtlich des vorteilhaften Verfahrens zur Montage und/oder Einstellung einer Riemen und Riemenscheiben aufweisenden Getriebeeinrichtung einer Servolenkung wird ebenfalls auf die weiteren Unteransprüche sowie auf das nachfolgend anhand der Zeichnung prinzipmäßig dargestellte Ausführungsbeispiel verwiesen.

Es zeigt:
- Fig. 1: eine prinzipmäßige Darstellung einer Servolenkung mit einer Schubstange bzw. Zahnstange, einem Ritzel mit Drehmomentsensor, einem Elektromotor und einer Getriebeeinrichtung;
- Fig. 2: ein Längsschnitt entlang der Schubstange bzw. Zahnstange der Servolenkung gemäß Fig. 1;
- Fig. 3: ein Querschnitt durch die Getriebeeinrichtung gemäß Schnitt A-A in Montagestellung; und
- Fig. 4: ein Querschnitt durch die Getriebeeinrichtung gemäß Schnitt A-A in Betriebsstellung.

Servolenkungen für Kraftfahrzeuge sind aus dem allgemeinen Stand der Technik hinlänglich bekannt, wozu beispielsweise auf die DE 100 52 275 A1 verwiesen wird, weshalb nachfolgend nur auf die für die Erfindung wesentlichen Merkmale näher eingegangen wird.

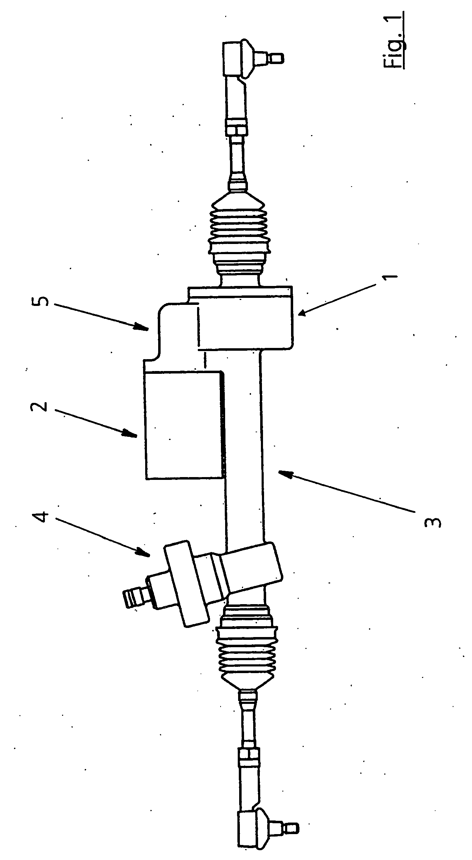

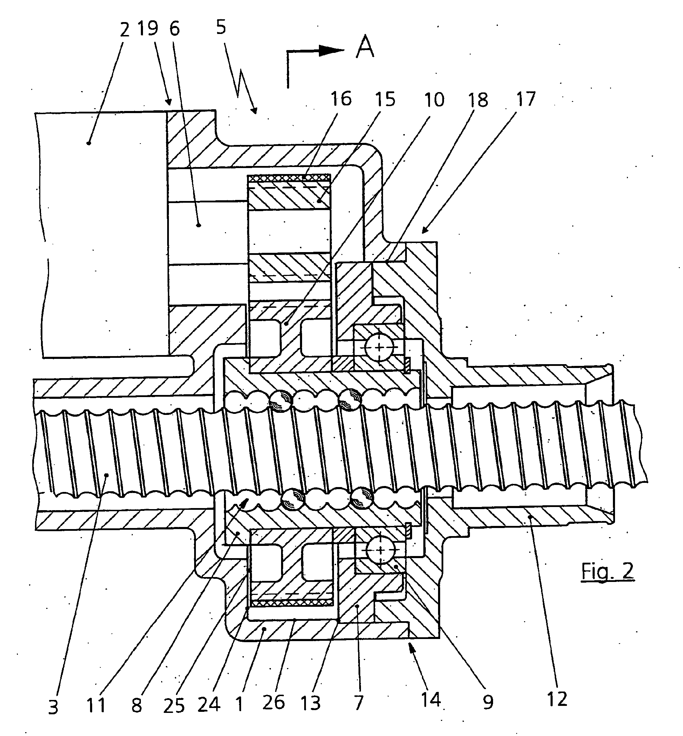

Fig. 1 zeigt eine Servolenkung, insbesondere für Kraftfahrzeuge, mit einem Lenkungsgehäuse 1, einem Elektromotor 2 und einer Schubstange 3 zum Auslenken von Fahrzeugrädern. Des weiteren weist die Servolenkung ein Ritzel mit Drehmomentsensor 4 sowie eine Getriebeeinrichtung 5 auf, mittels der die Schubstange 3 mit einer in Fig. 2 näher dargestellten Ausgangswelle 6 des Elektromotors 2 antriebsmäßig verbunden ist.

Die Schubstange 3 ist, wie aus Fig. 2 erkennbar, mittels einem Exzenter, der als Exzenterring 7 ausgebildet ist, gelagert. Der Exzenterring 7 ermöglicht dabei, dass der Achsabstand zwischen der Ausgangswelle 6 und der Schubstange 3 variierbar ist. Des weiteren übernimmt der Exzenterring 7 im Ausführungsbeispiel die Funktion eines Lagerrings, der somit entfallen kann. Die Schubstange 3 ist folglich mittels dem Exzenterring 7 in dem Lenkungsgehäuse 1 gelagert.

Die Schubstange 3 bildet einen Teil einer vormontierten Kugelspindel, die des weiteren den Exzenterring 7, eine Lenkmutter 8, ein Lager 9 sowie eine Riemenscheibe 10 beinhaltet. Die Riemenscheibe 10 stellt dabei einen Teil der Getriebeeinrichtung 5 dar. Die Schubstange 3 bildet mit der Lenkmutter 8 im wesentlichen ein Kugelgewinde 11.

Die Lenkmutter 8 ist über das Lager 9 und den Exzenterring 7 im Lenkungsgehäuse 1 gelagert. Ein Gehäusedeckel 12 des Lenkungsgehäuses 1 fixiert sowohl das Lager 9 spielfrei in dem Exzenterring 7 als auch den Exzenterring 7 in dem Lenkungsgehäuse 1. Um den spielfreien Einbau des Lagers 9 und die Anlage des Exzenterrings 7 an einem Anschlag 13 des Lenkungsgehäuses 1 zu gewährleisten, ist zwischen dem Lenkungsgehäuse 1 und dem Gehäusedeckel 12 ein Spalt 14 vorgesehen. Dadurch ist gewährleistet, dass der Exzenterring 7 durch den Gehäusedeckel 12 auf den Anschlag 13 gedrückt werden kann.

Die Lenkmutter 8 ist, wie aus Fig. 2 ersichtlich, drehfest mit der Riemenscheibe 10 verbunden.

Die Ausgangswelle 6 des Elektromotors 2 ist ebenfalls drehfest mit einer Riemenscheibe 15 verbunden, die einen Teil der Getriebeeinrichtung 5 darstellt. Ein Riemen 16 stellt die Getriebeverbindung des Elektromotors 2 mit der Schubstange 3 dar. Die Getriebeeinrichtung 5 besteht somit im wesentlichen aus dem Riemen 16 sowie den beiden Riemenscheiben 10, 15. Der Riemen 16 zur Verbindung der beiden Riemenscheiben 10, 15 kann als Zahnriemen, Keilriemen oder dergleichen ausgeführt sein. Im dargestellten Ausführungsbeispiel ist der Riemen 16 als Vielrippenriemen (Poly-V) ausgebildet.

Das Lenkungsgehäuse 1 weist eine in der Regel kreisrunde Öffnung 17 koaxial zur Schubstange 3 auf, durch die die Schubstange 3 mitsamt der Lenkmutter 8, dem Lager 9, dem Exzenterring 7 sowie der Riemenscheibe 10 eingebracht werden kann. Zum Verschließen der Öffnung 17 ist der Gehäusedeckel 12 vorgesehen, wobei in einem Bereich 18 zwischen dem Lenkungsgehäuse 1 und dem Gehäusedeckel 12 beispielsweise eine Gummidichtung, vorzugsweise ein O-Ring, angeordnet ist, mit dessen Hilfe eine einfache und zuverlässige Abdichtung herstellbar ist.

Das Lenkungsgehäuse 1 weist eine weitere, vorzugsweise ebenfalls kreisrunde Gehäuseöffnung 19 auf, die koaxial zu der einzubringenden Ausgangswelle 6 des Elektromotors 2 angeordnet ist.

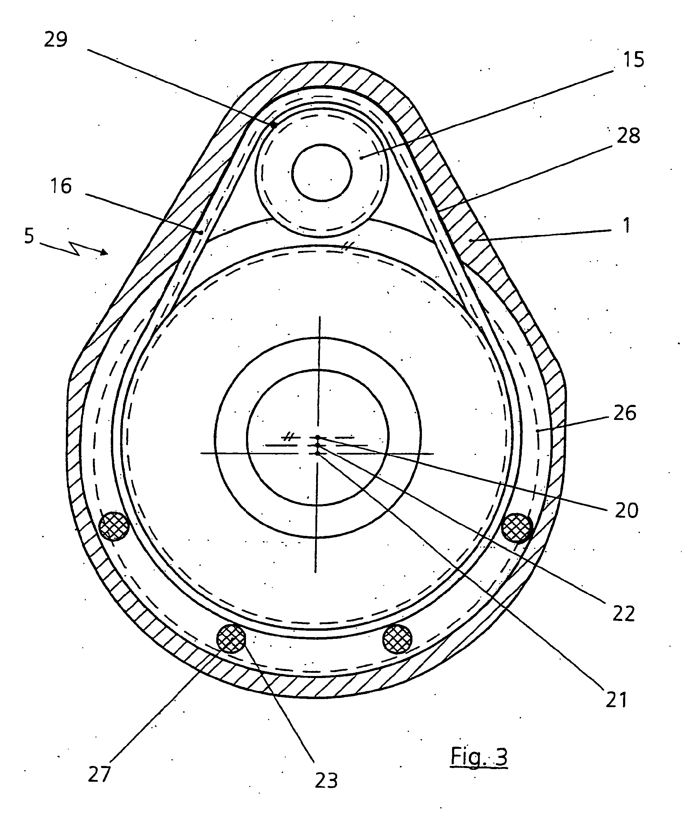

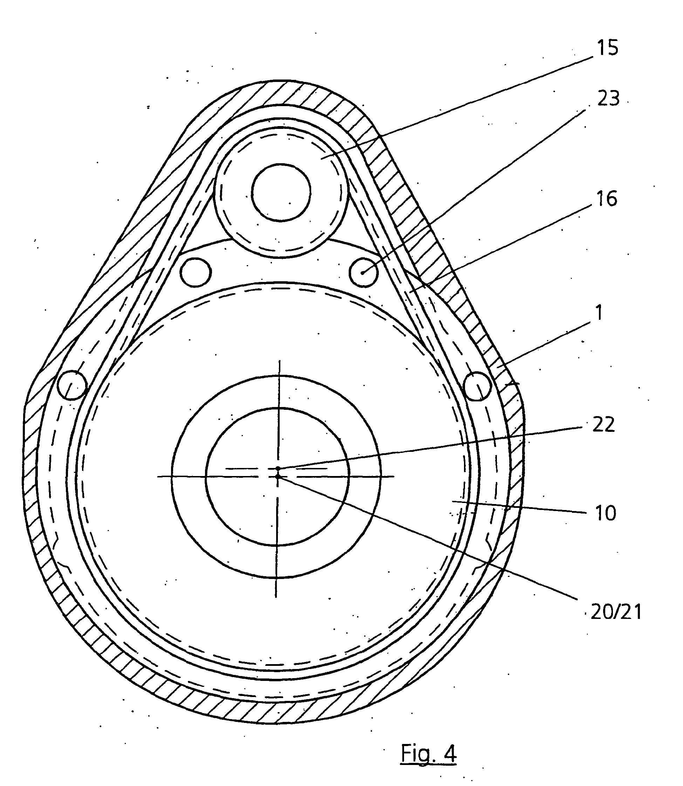

Fig. 3 und Fig. 4 zeigen einen Schnitt gemäß der Linie A-A der Fig. 2. Dabei stellt die Fig. 3 die Montagestellung und die Fig. 4 die spätere Betriebsstellung der Getriebeeinrichtung 5 dar. Die Betriebsstellung bzw. die Montagestellung ergeben sich aus der jeweiligen Position des Exzenterringes 7. In der Betriebsstellung des Exzenterringes 7 ist vorgesehen, dass die Achse (Punkt 20) der Schubstange 3 sowie der Riemenscheibe 10 auf der theoretischen Mittelachse 21 der Schubstange 3 liegt (siehe Fig. 4). Unter der theoretischen Mittelachse 21 ist die Achse zu verstehen entlang der die Schubstange 3 bzw. die Zahnstange im allgemeinen zum Betrieb einer Servolenkung ausgerichtet ist. Diese Achse entspricht dabei in der Regel der theoretischen Verbindungslinie zwischen den Spurstangenköpfen.

Der Exzenterring 7 dreht sich um den in Fig. 3 und Fig. 4 dargestellten Mittelpunkt 22.

Zum Erreichen der Montagestellung des Exzenterringes 7 wird dieser folglich um den Mittelpunkt 22 gedreht, so dass sich die Achse (Punkt 20) der Schubstange 3 bzw. der Riemenscheibe 10 in Richtung auf die Ausgangswelle 6 des Elektromotors 2 verschiebt. Daraus ergibt sich der in Fig. 3 dargestellte Schnitt mit dem Punkt 21, der die theoretische Mittelachse der Schubstange 3 bezeichnet, dem Mittelpunkt 22, um den sich der Exzenterring 7 dreht bzw. der den Mittelpunkt des Exzenterringes 7 bezeichnet, sowie dem Punkt 20, der die Achse der Schubstange 3/Riemenscheibe 10 bezeichnet.

Im Ausführungsbeispiel ist vorgesehen, dass sich die Montagestellung des Exzenterringes 7 durch eine Drehung des Exzenterringes 7 um 180°, ausgehend von der Betriebsstellung, erreichen lässt.

Fig. 3 und Fig. 4 zeigen Bohrungen 23 in dem Exzenterring 7, die zur Montagefixierung des Riemens 16 und/oder zur Einleitung der Drehbewegung (Montagestellung-Betriebsstellung) dienen. Vorgesehen sind vier Bohrungen 23, wobei hierbei auch eine beliebige andere Anzahl von Bohrungen 23 möglich ist. Die genaue Verwendung der Bohrungen 23 zur Montagefixierung des Riemens 16 ergibt sich aus dem nachfolgend beschriebenen Verfahren zur Montage und/oder Einstellung der Getriebeeinrichtung 5.

In nicht näher dargestellter Weise kann vorgesehen sein, dass der Gehäusedeckel 12 wenigstens eine Erhöhung, einen Vorsprung, ein Fixierglied, einen Montagestift oder dergleichen zum Eingreifen in die Bohrung 23 des Exzenterringes 7 aufweist. Dadurch kann der Exzenterring 7 in einfacher Weise mit Hilfe des Gehäusedeckels 12 verdreht werden, ohne dass hierfür ein spezielles separates Werkzeug notwendig ist.

Wie sich aus Fig. 2 ergibt, ist zwischen der Riemenscheibe 10 und einer stirnseitig zu der Riemenscheibe 10 verlaufenden Innenwandung 24 des Lenkungsgehäuses 1 ein Spalt 25 vorhanden. Die Breite des Spaltes 25 ist dabei geringer als die Breite einer Rippe des Riemens 16. Dadurch ist es in einfacher Weise möglich, eine falsche Montage des Riemens 16 insbesondere in einer Ausgestaltung als Vielrippenriemen auszuschließen, da der Riemen 16 nur in der vorgesehenen definierte Position montiert werden kann.

Ein Verfahren zur Montage und/oder Einstellung der Riemen 16 und Riemenscheiben 10, 15 aufweisenden Getriebeeinrichtung 5 der Servolenkung, insbesondere für Kraftfahrzeuge, wobei die Riemenscheibe 15 mit der Ausgangswelle 6 des Elektromotors 2 und die Riemenscheibe 10 mit der Schubstange 3 zur Auslenkung von Fahrzeugrädern verbunden ist, sieht eine exzentrische Lagerung der Schubstange 3 derart vor, dass der Achsabstand zwischen der Ausgangswelle 6 des Elektromotors 2 und der Schubstange 3 zu Montagezwecken der Getriebeeinheit 5 verringert werden kann.

Ergänzend dazu kann auch eine exzentrische Lagerung des Elektromotors 2 bzw. der Ausgangswelle 6 des Elektromotors 2 vorgesehen sein.

Zur Durchführung der Montage hat sich die Ausführung der nachfolgend beschriebenen Arbeitsschritte als besonders geeignet herausgestellt.

In einem ersten Arbeitsgang wird der Riemen 16 in das Lenkungsgehäuse 1 eingelegt. Da der Riemen 16 in der Regel einen kreisrunden Querschnitt hat, legt sich dieser an den Innenkreis 26 sowie die Innenwandung 24 des Lenkungsgehäuses 1 an. Dadurch ergibt sich ein Innendurchmesser des Riemens 16, der größer ist als der Außendurchmesser der Riemenscheibe 10.

In einem zweiten Arbeitsschritt wird eine vormontierte Einheit, welche auch als Kugelspindel bezeichnet wird, im wesentlichen bestehend aus der Schubstange 3, der Riemenscheibe 10, der Lenkmutter 8, dem Lager 9 und dem Exzenterring 7 in der Betriebsstellung des Exzenterringes 7 im Lenkungsgehäuse 1 montiert (siehe Fig. 4). Betriebsstellung heißt dabei, dass der Exzenterring 7 so gedreht ist, dass der Punkt 20, welcher die Achse Schubstange 3/Riemenscheibe 10 bezeichnet, und der Punkt 21, der die theoretische Mittelachse der Schubstange 3 im Betrieb darstellt, zusammenfallen.

In einem dritten Arbeitsschritt wird nun der Riemen 16 von der Seite des Elektromotors 2 her in die Riemenscheibe 10 der Schubstange 3 hineingezogen. Bei der im Ausführungsbeispiel gewählten Ausgestaltung des Riemens 16 als Vielrippenriemen gewährleistet, wie bereits beschrieben, der definierte Abstand 25 (Fig. 2), dass der Riemen 16 in axialer Richtung definiert montiert wird. Anschließend wird der Exzenterring 7 in die Montagestellung gedreht, wobei dies im Ausführungsbeispiel einer Drehung um 180° entspricht.

Um sicherzustellen, dass der Riemen 16 an der Riemenscheibe 10 anliegt, kann in einem weiteren vorteilhaften Arbeitsschritt der Riemen 16 mit Fixiergliedern 27, welche durch die Bohrungen 23 im Exzenterring 7 gesteckt werden, gesichert werden (siehe Fig. 3).

Nach der Drehung des Exzenterringes 7 in die Montagestellung, gegebenenfalls mit Unterstützung der als Montagestifte 27 ausgebildeten Fixierglieder, legt sich der Riemen 16 an die Kontur 28 des Lenkungsgehäuses 1 auf der Seite des Elektromotors 2 an, wie in Fig. 3 dargestellt. Dabei ergibt sich zwischen dem Innendurchmesser des Riemens 16 und der (noch nicht montierten) Riemenscheibe 15 ein Spalt 29.

In einem vierten Arbeitsschritt wird nun der Elektromotor 2 mit der Riemenscheibe 15 im Lenkungsgehäuse 1 montiert bzw. positioniert. Falls in einem vorhergehenden Zwischenschritt, wie im Ausführungsbeispiel erfolgt, Montagestifte 27 montiert wurden, werden diese nunmehr wieder entfernt.

In einem fünften Arbeitsschritt wird nun der Exzenterring 7 wieder zurück in die Betriebsstellung gedreht. Dabei wird der Riemen 16 gespannt.

Die Getriebeeinrichtung 5 lässt sich durch das beschriebene Verfahren in einfacher Weise serienmäßig montieren.

Durch das Drehen des Exzenterringes 7 kann der Achsabstand der Getriebeeinrichtung 5 und/oder der Riemen 16 auf eine definierte Vorspannung eingestellt werden.

Das Drehen des Exzenterringes 7 kann mit einem Werkzeug erfolgen, welches z.B. in die Bohrung 23 eingreift. In einer vorteilhaften Ausführungsform kann die Drehung auch direkt mit dem Gehäusedeckel 12 durchgeführt werden. Dazu kann der Gehäusedeckel 12, in nicht dargestellte Weise, beispielsweise mit einer Erhöhung, einem Fixierglied oder dergleichen, ausgebildet sein, welche in wenigstens eine der Bohrungen 23 eingreift.

Die Ausführung des Exzenterrings 7 erfolgt in vorteilhafter Weise wie in Fig. 3 dargestellt. Durch die Lagerung des Exzenterringes 7 im Mittelpunkt 22 bewegt sich die als Punkt 20 bezeichnete Achse der Schubstange 3/Riemenscheibe 10 beim Drehen des Exzenterringes 7 auf einem Kreisbogen um den Mittelpunkt 22 des Exzenterringes 7. D.h. nach der Drehung des Exzenterringes 7 in die Betriebsstellung liegt die Achse 20 der Schubstange 3/Riemenscheibe 10 genau im theoretischen Mittelpunkt bzw. auf der Mittelachse (Punkt 21) der Schubstange.

Die erfindungsgemäße Lösung ist nicht auf den Einsatz von Schubstangen, die als Teil eines Kugelgewindes ausgebildet sind, beschränkt, vielmehr eignet sich die erfindungsgemäße Lösung auch zur Vereinfachung der Montage derartiger Getriebeeinrichtungen in andere Servolenkungen. Ein Einsatz ist beispielsweise auch bei Wälzgetrieben sowie bei Planeten-Wälzgetrieben vorstellbar. Die erfindungsgemäße Lösung eignet sich jedoch in besonderem Maße für Servolenkungen, die ein Kugelumlaufgewinde aufweisen.

Die erfindungsgemäße Lösung eignet sich auch für Zahnstangen-/Schubstangenlenkungen mit redundantem elektrischen Antrieb, z.B. für steer-by-wire-Lenkungen, die einen zweiten Elektromotor 2 sowie eine zweite Getriebeeinrichtung 5 aufweisen.

## Patentansprüche

1. Servolenkung, insbesondere für Kraftfahrzeuge, mit einem Lenkungsgehäuse (1), einem Elektromotor (2) und einer Schubstange (3) zum Auslenken von Fahrzeugrädern, wobei eine Ausgangswelle (6) des Elektromotors (2) und die Schubstange (3) jeweils mit einer Riemenscheibe (10,15) verbunden sind und die Riemenscheibe (15) der Ausgangswelle (6) mit der Riemenscheibe (10) der Schubstange (3) mittels einem Riemen (16) antriebsmäßig verbunden ist und die Schubstange (3) mittels einem als Exzenterring ausgebildeten Exzenter (7) in dem Lenkungsgehäuse (1) derart gelagert ist, dass der Achsabstand zwischen der Ausgangswelle (6) und der Schubstange (3) variierbar ist.

2. Servolenkung nach Anspruch 1, **dadurch gekennzeichnet, dass** der Exzenterring (7) derart angeordnet bzw. gelagert ist, dass die Achse (20) der Schubstange (3)/ Riemenscheibe (10) in Betriebsstellung des Exzenterrings (7) auf der theoretischen Mittelachse (21) der Schubstange (3) liegt.

3. Servolenkung nach Anspruch 2, **dadurch gekennzeichnet, dass** die Achse (20) der Schubstange (3)/Riemenscheibe (10) in Montagestellung des Exzenterrings (7) in Richtung auf die Ausgangswelle (6) des Elektromotors (2) verschoben ist.

4. Servolenkung nach Anspruch 3, **dadurch gekennzeichnet, dass** die Montagestellung des Exzenterrings (7) durch eine Drehung des Exzenterrings (7), vorzugsweise um 180°, ausgehend von der Betriebsstellung, erreichbar ist.

5. Servolenkung nach einem der Ansprüche 1 bis 4, **dadurch gekennzeichnet, dass** die Schubstange (3) als Teil eines Kugelgewindes (11) ausgebildet ist.

6. Servolenkung nach Anspruch 5, **dadurch gekennzeichnet, dass** eine Lenkmutter (8) des Kugelgewindes (11) über ein Lager (9) und den Exzenterring (7) im Lenkungsgehäuse (1) gelagert ist.

7. Servolenkung nach Anspruch 6, **dadurch gekennzeichnet, dass** ein Gehäusedeckel (12) des Lenkungsgehäuses (1) sowohl das Lager (9) spielfrei in dem Exzenterring (7) als auch den Exzenterring (7) in dem Lenkungsgehäuse (1) fixiert.

8. Servolenkung nach einem der Ansprüche 1 bis 7, **dadurch gekennzeichnet, dass** der Riemen (16) zur Verbindung der beiden Riemenscheiben (10,15) als Vielrippenriemen ausgebildet ist.

9. Servolenkung nach Anspruch 8, **dadurch gekennzeichnet, dass** zwischen der Riemenscheibe (10) und einer stirnseitig zu der Riemenscheibe (10) verlaufenden Innenwandung (24) des Lenkungsgehäuses (1) ein Spalt (25) vorhandene ist, dessen Breite geringer ist als die Breite einer Rippe des Riemens (16).

10. Servolenkung nach einem der Ansprüche 1 bis 9, **dadurch gekennzeichnet, dass** der Exzenterring (7) zur Montagefixierung des Riemens (16) und/oder zur Einleitung der Drehbewegung mit wenigstens einer Bohrung (23) versehen ist.

11. Servolenkung nach Anspruch 10, **dadurch gekennzeichnet, dass** der Gehäusedeckel (12) wenigstens eine Erhöhung, einen Vorsprung, ein Fixierglied, einen Montagestift oder dergleichen zum Eingreifen in die Bohrung (23) des Exzenterrings (7) aufweist.

12. Verfahren zur Montage und/oder Einstellung einer Riemen (16) und Riemenscheiben (10,15) aufweisenden Getriebeeinrichtung einer Servolenkung, insbesondere für Kraftfahrzeuge, wobei eine Riemenscheibe (15) mit einer Ausgangswelle (6) eines Elektromotors (7) und eine Riemenscheibe (10) mit einer Schubstange (3) zur Auslenkung von Fahrzeugrädern verbunden ist, und die Schubstange (3) exzentrisch derart gelagert ist, dass der Achsabstand zwischen der Ausgangswelle (6) des Elektromotors (2) und der Schubstange (3) zu Montagezwecken der Getriebeeinheit (5) verringert wird wobei folgende Arbeitsschritte durchgeführt werden: Der Riemen (16) wird in ein Lenkungsgehäuse (1) eingelegt, eine vormontierte Einheit aus der Schubstange (3), der Riemenscheibe (10), einer Lenkmutter (8), einem Lager (9) und einem Exzenterring (7) wird in der Betriebsstellung des Exzenterringes (7) im Lenkungsgehäuse (1) montiert, der Riemen (16) wird von der Seite des Elektromotors (2) her in die Riemenscheibe (10) der Schubstange (3) hineingezogen, anschließend wird der Exzenterring (7) in Montagestellung gedreht, der Elektromotor (2) mit der Riemenscheibe (15) wird im Lenkungsgehäuse (1) montiert bzw. positioniert, und der Exzenterring (7) wird zurück in die Betriebsstellung gedreht.

13. Verfahren nach Anspruch 12, **dadurch gekennzeichnet, dass** nach dem Drehen des Exzenterringes (7) in die Montagestellung mittels Fixiergliedern (27) sichergestellt wird, dass der Riemen (16) an der Riemenscheibe (10) der Schubstange (3) anliegt.

14. Verfahren nach Anspruch 12 oder 13, **dadurch gekennzeichnet, dass** die Fixierglieder (27) nach der Montage bzw. Positionierung des Elektromotors (2) wieder entfernt werden.

15. Verfahren nach einem der Ansprüche 12 bis 14, **dadurch gekennzeichnet, dass** die Verdrehung des Exzenterrings (7) mittels einem Gehäusedeckel (12), der in geeignete Bohrungen (23) des Exzenterringes (7) eingreift, durchgeführt wird.

## Claims

1. Power steering system, in particular for motor vehicles, having a steering housing (1), an electric motor (2) and a push rod (3) for deflecting vehicle wheels, an output shaft (6) of the electric motor (2) and the push rod (3) being connected in each case to a pulley wheel (10, 15) and the pulley wheel (15) of the output shaft (6) being drive-connected to the pulley wheel (10) of the push rod (3) by means of a belt (16), and the push rod (3) being mounted in the steering housing (1) by means of an eccentric (7) which is configured as an eccentric ring, in such a way that the axial spacing between the output shaft (6) and the push rod (3) can be varied.

2. Power steering system according to Claim 1, **characterized in that** the eccentric ring (7) is arranged and mounted in such a way that the axis (20) of the push rod (3)/pulley wheel (10) lies on the theoretical centre axis (21) of the push rod (3) in the operating position of the eccentric ring (7).

3. Power steering system according to Claim 2, **characterized in that** the axis (20) of the push rod (3)/pulley wheel (10) is displaced in the direction of the output shaft (6) of the electric motor (2) in the assembly position of the eccentric ring (7).

4. Power steering system according to Claim 3, **characterized in that** the assembly position of the eccentric ring (7) can be reached by a rotation of the eccentric ring (7), preferably by 180°, starting from the operating position.

5. Power steering system according to one of Claims 1 to 4, **characterized in that** the push rod (3) is configured as part of a ball screw (11).

6. Power steering system according to Claim 5, **characterized in that** a steering nut (8) of the ball screw (11) is mounted in the steering housing (1) via a bearing (9) and the eccentric ring (7).

7. Power steering system according to Claim 6, **characterized in that** a housing cover (12) of the steering housing (1) fixes both the bearing (9) without play in the eccentric ring (7) and the eccentric ring (7) in the steering housing (1).

8. Power steering system according to one of Claims 1 to 7, **characterized in that** the belt (16) for connecting the two pulley wheels (10, 15) is configured as a multiply ribbed belt.

9. Power steering system according to Claim 8, **characterized in that** there is a gap (25) between the pulley wheel (10) and an inner wall (24) of the steering housing (1) which runs on the end side of the pulley wheel (10), the width of the said gap (25) being smaller than the width of a rib of the belt (16).

10. Power steering system according to one of Claims 1 to 9, **characterized in that** the eccentric ring (7) is provided with at least one hole (23) for fixing the assembly of the belt (16) and/or for initiating the rotational movement.

11. Power steering system according to Claim 10, **characterized in that** the housing cover (12) has at least one elevation, one projection, one fixing element, one assembly pin or the like for engaging into the hole (23) of the eccentric ring (7).

12. Method for assembling and/or adjusting a mechanical device of a power steering system which has belts (16) and pulley wheels (10, 15), in particular for motor vehicles, one pulley wheel (15) being connected to an output shaft (6) of an electric motor (2) and one pulley wheel (10) being connected to a push rod (3) for deflecting vehicle wheels, and the push rod (3) being mounted eccentrically in such a way that the axial spacing between the output shaft (6) of the electric motor (2) and the push rod (3) is reduced for assembly purposes of the mechanical unit (5), the following work steps being carried out:
the belt (16) is inserted into a steering housing (1), a preassembled unit comprising the push rod (3), the pulley wheel (10), a steering nut (8), a bearing (9) and an eccentric ring (7) is mounted in the steering housing (1) in the operating position of the eccentric ring (7), the belt (16) is pulled into the pulley wheel (10) of the push rod (3) from the side of the electric motor (2), the eccentric ring (7) is subsequently rotated into the assembly position, the electric motor (2) is mounted or positioned with the pulley wheel (15) in the steering housing (1), and the eccentric ring (7) is rotated back into the operating position.

13. Method according to Claim 12, **characterized in that**, after the eccentric ring (7) is rotated into the assembly position, it is ensured by means of fixing elements (27) that the belt (16) bears against the pulley wheel (10) of the push rod (3).

14. Method according to Claim 12 or 13, **characterized in that** the fixing elements (27) are removed again after the mounting or positioning of the electric motor (2) .

15. Method according to one of Claims 12 to 14, **characterized in that** the rotation of the eccentric ring (7) is carried out by means of a housing cover (12) which engages into corresponding holes (23) of the eccentric ring (7).

## Revendications

1. Direction assistée, en particulier pour des véhicules automobiles, avec un boîtier de direction (1), un moteur électrique (2) et une bielle (3) pour dévier des roues du véhicule, dans laquelle un arbre de sortie (6) du moteur électrique (2) et la bielle (3) sont respectivement assemblés à une poulie (10, 15) et la poulie (15) de l'arbre de sortie (6) est en relation d'entraînement avec la poulie (10) de la bielle (3) au moyen d'une courroie (16) et la bielle (3) est supportée dans le boîtier de direction (1) au moyen d'un excentrique (7) formé par une bague excentrique de telle manière que la distance entre l'axe de l'arbre de sortie (6) et l'axe de la bielle (3) soit variable.

2. Direction assistée selon la revendication 1, **caractérisée en ce que** la bague excentrique (7) est disposée, respectivement montée, de telle manière que l'axe (20) de la bielle (3)/poulie (10) se trouve sur l'axe central théorique (21) de la bielle (3) dans la position de fonctionnement de la bague excentrique (7).

3. Direction assistée selon la revendication 2, **caractérisée en ce que** l'axe (20) de la bielle (3)/poulie (10) est déplacé en direction de l'arbre de sortie (6) du moteur électrique (2) dans la position de montage de la bague excentrique (7).

4. Direction assistée selon la revendication 3, **caractérisée en ce que** la position de montage de la bague excentrique (7) peut être atteinte par une rotation de la bague excentrique (7), de préférence de 180°, à partir de la position de fonctionnement.

5. Direction assistée selon l'une quelconque des revendications 1 à 4, **caractérisée en ce que** la bielle (3) forme une partie d'un filet à billes (11).

6. Direction assistée selon la revendication 5, **caractérisée en ce qu'**un écrou de direction (8) du filet à billes (11) est supporté dans le boîtier de direction (1) par un palier (9) et la bague excentrique (7).

7. Direction assistée selon la revendication 6, **caractérisée en ce qu'**un couvercle de boîtier (12) du boîtier de direction (1) fixe aussi bien le palier (9) sans jeu dans la bague excentrique (7) que la bague excentrique (7) dans le boîtier de direction (1).

8. Direction assistée selon l'une quelconque des revendications 1 à 7, **caractérisée en ce que** la courroie (16) servant à relier les deux poulies (10, 15) est formée par une courroie à nervures multiples.

9. Direction assistée selon la revendication 8, **caractérisée en ce qu'**elle comporte, entre la poulie (10) et une paroi interne (24) du boîtier de direction (1) située du côté frontal par rapport à la poulie (10), une fente (25) dont la largeur est plus petite que la largeur d'une nervure de la courroie (16).

10. Direction assistée selon l'une quelconque des revendications 1 à 9, **caractérisée en ce que** la bague excentrique (7) est pourvue d'au moins un alésage (23) pour la fixation de montage de la courroie (16) et/ou pour l'introduction du mouvement de rotation.

11. Direction assistée selon la revendication 10, **caractérisée en ce que** le couvercle de boîtier (12) présente au moins une protubérance, une saillie, un organe de fixation, une broche de montage ou analogue, à introduire dans l'alésage (23) de la bague excentrique (7).

12. Procédé pour le montage et/ou le réglage d'un dispositif de transmission comprenant une courroie (16) et des poulies (10, 15), d'une direction assistée, en particulier pour des véhicules automobiles, dans lequel une poulie (15) est assemblée à un arbre de sortie (6) d'un moteur électrique (2) et une poulie (10) est assemblée à une bielle (3) pour la déviation de roues du véhicule, et la bielle (3) est supportée de telle manière que la distance entre l'axe de l'arbre de sortie (6) du moteur électrique (2) et l'axe de la bielle (3) soit réduite pour le montage de l'unité de transmission (5), dans lequel on exécute les opérations suivantes: on dépose la courroie (16) dans un boîtier de direction (1), on monte dans le boîtier de direction (1) une unité préassemblée composée de la bielle (3), de la poulie (10), d'un écrou de direction (8), d'un palier (9) et d'une bague excentrique (7), dans la position de fonctionnement de la bague excentrique (7), on tend la courroie (16) dans la poulie (10) de la bielle (3) à partir du côté du moteur électrique (2), ensuite on fait tourner la bague excentrique (7) dans la position de montage, on monte, respectivement on positionne le moteur électrique (2) avec la poulie (15) dans le boîtier de direction (1), et on fait tourner la bague excentrique (7) en sens inverse pour la ramener dans la position de fonctionnement.

13. Procédé selon la revendication 12, **caractérisé en ce qu'**après la rotation de la bague excentrique (7) dans la position de montage, on assure au moyen d'organes de fixation (27) que la courroie (16) est appliquée sur la poulie (10) de la bielle (3).

14. Procédé selon la revendication 12 ou 13, **caractérisé en ce que** les organes de fixation (27) sont de nouveau enlevés après le montage, respectivement le positionnement, du moteur électrique (2).

15. Procédé selon l'une quelconque des revendications 12 à 14, **caractérisé en ce que** la rotation de la bague excentrique (7) est exécutée au moyen d'un couvercle de boîtier (12), qui s'engage dans des alésages appropriés (23) de la bague excentrique (7).
